# EUROPEAN PATENT APPLICATION

(11) **EP 3 965 026 A1**
(43) Date of publication of application: **09.03.2022**
(21) Application number: 19955393.4
(22) Date of filing: 31.12.2019
(51) Int. Cl.: G06Q 10/02

(54) **METHOD AND DEVICE FOR USE IN INFORMATION PROCESSING, AND COMPUTER STORAGE MEDIUM**

(30) Priority: 04.12.2019 CN 201911226475
(71) Applicant: Shanghai Pateo Electronic Equipment Manufacturing Co., Ltd, Shanghai 201821 (CN)
(72) Inventor: YING, Zhenkai, Shanghai 201821 (CN); SHI, Hongren, Shanghai 201821 (CN); LI, Yun, Shanghai 201821 (CN); WANG, Hui, Shanghai 201821 (CN)
(74) Representative: Ramrath, Lukas
(86) International application number: PCT/CN2019/130643
(87) International publication number: WO 2021/109306

(57) **Abstract**

A method for information processing, a device and a computer-readable storage medium are provided according to implementations of the disclosure. The method includes the following. At an electronic device, an available period of a vehicle is determined based on a schedule of a user of the electronic device which is associated with the vehicle. Whether the available period of the vehicle satisfies a predetermined condition is determined. A share request for the vehicle is transmitted to a server when the available period of the vehicle satisfies the predetermined condition, where the share request is indicative of the available period and information of the vehicle. In this way, the available period of the vehicle is determined based on the schedule of the user of the electronic device to perform vehicle sharing, which makes the vehicle sharing more refined and intelligent.

## Description

### TECHNICAL FIELD

This disclosure relates to the field of information processing, and in particular to methods for information processing, a device, and a computer storage medium.

### BACKGROUND

With development of sharing economy, more and more people implement their trip plans by shared mobility, such as sharing bike, sharing vehicle. However, currently, the shared mobility is usually operated under a business-to-customer (B2C) model. That is, a shared mobility provider puts many bikes or vehicles on a market for those who need them for trips, which is not a really effective solution to demands for the shared mobility of a large number of individual users.

### SUMMARY

Implementations of the disclosure provide methods for information processing, a device, and a computer storage medium, to determine an available period of a vehicle based on a schedule of a user of an electronic device, thus performing vehicle sharing, which makes the vehicle sharing more refined and intelligent; or to determine a vehicle usage period and a vehicle usage location of the user based on the schedule of the user, which satisfies a vehicle usage demand of the user more accurately and intelligently.

According to a first aspect, a method for information processing is provided. The method includes the following. At an electronic device, an available period of a vehicle is determined based on a schedule of a user of the electronic device, where the electronic device is associated with the vehicle. Whether the available period of the vehicle satisfies a predetermined condition is determined. A share request for the vehicle is transmitted to a server when the available period of the vehicle satisfies the predetermined condition, where the share request is indicative of the available period and information of the vehicle.

According to a second aspect, an electronic device is provided. The electronic device includes at least one processing unit and at least one memory. The at least one memory is coupled with the at least one processing unit and stores instructions configured to be executed by the at least one processing unit. When executed by the at least one processing unit, the instructions cause the electronic device to carry out actions, including: determining, at the electronic device, an available period of a vehicle based on a schedule of a user of the electronic device, where the electronic device is associated with the vehicle; determining whether the available period of the vehicle satisfies a predetermined condition; and transmitting a share request for the vehicle to a server when the available period of the vehicle satisfies the predetermined condition, where the share request is indicative of the available period and information of the vehicle.

According to a third aspect, a computer-readable storage medium is provided. The computer-readable storage medium stores a computer program thereon. When executed by a machine, the computer program causes the machine to implement any of operations of the method of the first aspect.

According to a fourth aspect, a method for information processing is provided. The method includes the following. At an electronic device, a vehicle usage period and a vehicle usage location of a user are determined based on a schedule of a user of the electronic device. A vehicle usage request is transmitted to a server based on the vehicle usage period and the vehicle usage location.

According to a fifth aspect, an electronic device is provided. The electronic device includes at least one processing unit and at least one memory. The at least one memory is coupled with the at least one processing unit and stores instructions configured to be executed by the at least one processing unit. When executed by the at least one processing unit, the instructions cause the electronic device to carry out actions, including: determining, at the electronic device, a vehicle usage period and a vehicle usage location of a user based on a schedule of a user of the electronic device; transmitting a vehicle usage request to a server based on the vehicle usage period and the vehicle usage location.

According to a sixth aspect, a computer-readable storage medium is provided. The computer-readable storage medium stores a computer program thereon. When executed by a machine, the computer program causes the machine to implement any of operations of the method of the fourth aspect.

The summary is provided to introduce concepts of the disclosure in a simplified form, which will be further described in the following detailed description. The summary does not intend to identify key features or essential features of the present disclosure, nor does it intend to limit the scope of the present disclosure.

### BRIEF DESCRIPTION OF THE DRAWINGS

The foregoing and other objects, features, and advantages of the present disclosure will become more apparent through a more detailed description of exemplary implementations of the present disclosure in conjunction with the accompanying drawings. In the exemplary implementations of the present disclosure, the same reference numerals generally represent the same components.
FIG. 1 is a schematic diagram illustrating an example information processing environment 100 according to implementations of the disclosure.
FIG. 2 is a schematic flow chart illustrating a method 200 for information processing according to implementations of the disclosure.
FIG. 3 is a schematic flow chart illustrating a method 300 for determining an available period of a vehicle according to implementations of the disclosure.
FIG. 4 is a schematic flow chart illustrating a method 400 for determining an available period of a vehicle according to implementations of the disclosure.
FIG. 5 is a schematic flow chart illustrating a method 500 for information processing according to implementations of the disclosure.
FIG. 6 is a schematic flow chart illustrating a method 600 for information processing according to implementations of the disclosure.
FIG. 7 is a schematic flow chart illustrating a method 700 for determining a vehicle usage period and a vehicle usage location of a user according to implementations of the disclosure.
FIG. 8 is a schematic flow chart illustrating a method 800 for determining a vehicle usage period and a vehicle usage location of a user according to implementations of the disclosure.
FIG. 9 is a schematic flow chart illustrating a method 900 for information processing according to implementations of the disclosure.
FIG. 10 is a schematic flow chart illustrating a method 1000 for information processing according to implementations of the disclosure.
FIG. 11 is a schematic block diagram illustrating an example device 1100 which can be used to implement the disclosure.

In various figures, the same or corresponding numerals represent the same or corresponding parts.

### DETAILED DESCRIPTION

Various implementations of the present disclosure will be described in more details with reference to the drawings. Although the drawings illustrate the implementations of the present disclosure, it should be appreciated that the present disclosure can be implemented in various manners and should not be limited to the implementations explained herein. On the contrary, the implementations are provided to make the present disclosure more thorough and complete and to fully convey the scope of the present disclosure to those skilled in the art.

As used herein, the term "include" and its variants are to be read as open-ended terms that mean "include, but is not limited to." The term "or" is to be read as "and/or" unless the context clearly indicates otherwise. The term "based on" is to be read as "at least based on in part." The terms "one example implementation" and "one implementation" are to be read as "at least one example implementation." The term "a further implementation" is to be read as "at least a further implementation." The terms "first", "second" and so on can refer to same or different objects. The following text also can include other explicit and implicit definitions.

Currently, a shared mobility model is usually a business-to-customer (B2C) model. In other words, a shared mobility provider puts many bikes or vehicles on a market for those who need them for trips, which is not a really effective solution to demands for the shared mobility of a large number of individual users. Specifically, in a case that an individual has a vehicle, the individual needs to use the vehicle at part of time, but does not need to use the vehicle at other time (i.e., the vehicle is available). Currently there is no mechanism to solve the problem of vehicle sharing for such users.

To solve at least partially the foregoing problem and one or more of other potential problems, implementations of the disclosure provide a scheme for information processing. In this scheme, at an electronic device, an available period of a vehicle is determined based on a schedule of a user of the electronic device, where the electronic device is associated with the vehicle. Whether the available period of the vehicle satisfies a predetermined condition is determined. A share request for the vehicle is transmitted to a server when the available period of the vehicle satisfies the predetermined condition, where the share request is indicative of the available period and information of the vehicle.

In this way, the available period of the vehicle is determined based on the schedule of the user of the electronic device to perform the vehicle sharing, which makes the vehicle sharing more refined and intelligent.

Currently, for a demand for a tripping vehicle, the users usually need to actively input a vehicle usage time and a vehicle usage location to book a vehicle by an application of a mobile phone or an electronic device, which is complex in operations and not intelligent.

To solve at least partially the foregoing problem and one or more of other potential problems, implementations of the disclosure provide a scheme for information processing. In this scheme, at an electronic device, a vehicle usage period and a vehicle usage location of a user is determined based on a schedule of a user of the electronic device. A vehicle usage request is transmitted to a server based on the vehicle usage period and the vehicle usage location.

In this way, the vehicle usage period and the vehicle usage location of the user are determined based on the schedule of the user, which satisfies a vehicle usage demand of the user more accurately and intelligently.

In the following, specific examples of the scheme will be described in greater detail in conjunction with figures.

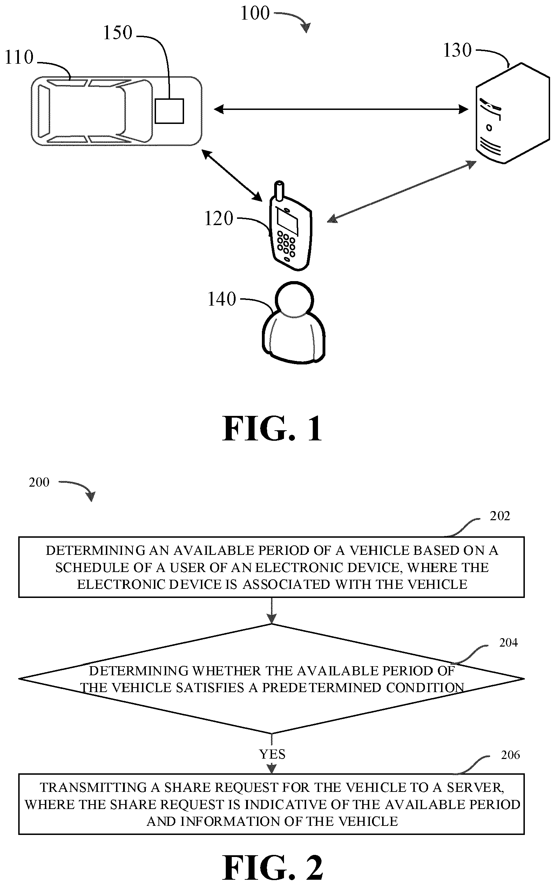

FIG. 1 is a schematic diagram illustrating an example information processing environment 100 according to implementations of the disclosure. The information processing environment 100 involves a vehicle 110, an electronic device 120, a server 130, and a user 140.

The vehicle 110 includes at least an in-vehicle electronic device 150 and a communication module.

The in-vehicle electronic device 150 may be, but not limited to, an in-vehicle computer, an in-vehicle controller, and so on. The in-vehicle electronic device 150 includes at least a processor and a memory. The memory is configured to store one or more computer programs. The processor is coupled with the memory and is configured to execute the one or more computer programs to cause the in-vehicle electronic device to achieve one or more functions. In some implementations, the in-vehicle electronic device 150 may further include or be coupled with an in-vehicle display, to allow display of related interfaces.

The communication module, such as a telematics BOX (T-BOX), may communicate with at least one of the electronic device 120 or the server 130. In some implementations, the communication module may include a direct communication module, which can be in a direct communication connection with the electronic device 120. For example, the direct communication module may communicate with the electronic device 120 via any direct communication technologies, such as Bluetooth, wireless fidelity (Wi-Fi), Zigbee, near field communication (NFC), and universal serial bus (USB). In some implementations, the in-vehicle electronic device 150 may receive a vehicle control instruction from the electronic device 120 via the direct communication module. For example, the in-vehicle electronic device 150 may receive an unlock instruction for a virtual Bluetooth key from the electronic device 120 via a Bluetooth module, so as to unlock a vehicle.

Alternatively or additionally, the communication module may include a cellular communication module configured to communicate with the at least one of the electronic device 120 or the server 130 via a cellular network. For example, the cellular communication module may communicate with the at least one of the electronic device 120 or the server 130 via any cellular communication technologies, such as 5^{th} generation (5G), long term evolution (LTE), evolution-data optimized (EVDO), code division multiple access (CDMA), general packet radio service (GPRS), and enhanced data rate for GSM evolution (EDGE).

In some implementations, the electronic device 120 may have wireless transmitting and receiving capabilities and may have access to the Internet. The electronic device 120 may be, for example, but not limited to, a mobile phone, a smart phone, a laptop computer, a tablet computer, a personal digital assistant (PDA), a wearable device, and the like.

In some implementations, the electronic device 120 may include at least a communication module, a memory, and a processor. The communication module is configured to communicate with at least one of the vehicle 110 or the server 130. The communication module is similar to the communication module in the vehicle 110, which will not be further described thereon. The memory is configured to store one or more computer programs. The processor is coupled with the memory and is configured to execute the one or more computer programs to cause the electronic device 120 to achieve one or more functions.

The server 130 is capable of communicating with at least one of the vehicle 110 or the electronic device 120. The server 130 may include, but not limited to, a personal computer, a server computer, a multi-processor system, a mainframe computer, a distributed computing environment including any of the aforementioned systems or devices, and the like. In some implementations, the server 130 may have one or more processing units, including dedicated processing units such as graphics processing units (GPUs), field-programmable gate arrays (FPGAs), and application specific integrated circuits (ASICs), and general-purpose processing units such as central processing units (CPUs). In addition, one or more virtual machines may also be running on the server 130.

In some implementations, a platform for vehicle sharing service may be implemented in the server 130. In some implementations, the server 130 may be a part of the platform for the vehicle sharing service.

In the following, operations performed by the electronic device 120 will be described in detail in conjunction with FIG. 2.

FIG. 2 is a schematic flow chart illustrating a method 200 for information processing according to implementations of the disclosure. For example, the method 200 may be performed by the electronic device 120 as shown in FIG. 1. It should be noted that the method 200 may further include additional blocks not shown and/or may omit blocks shown, and the disclosure is not limited thereto.

At block 202, at the electronic device 120, an available period of a vehicle 110 is determined based on a schedule of a user 140 of the electronic device 120, where the electronic device 120 is associated with the vehicle 110.

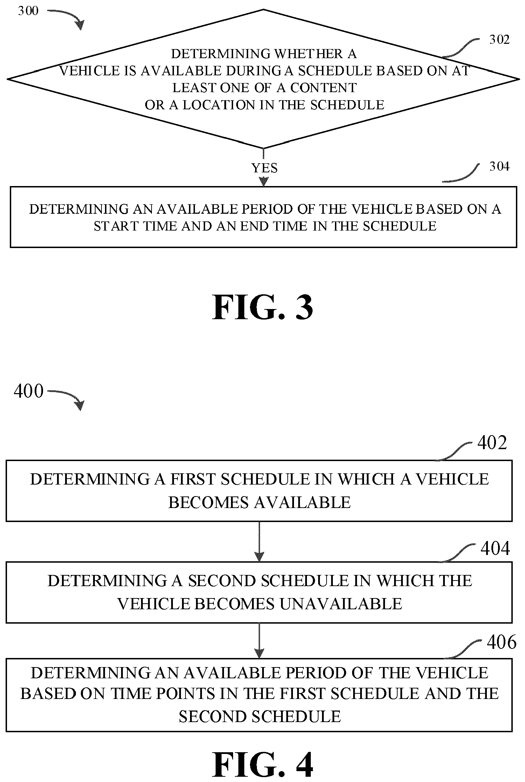

The schedule may include, for example, a calendar, traveling reservation information, and the like, which will be described in detail hereinafter in conjunction with FIG. 3.

At block 204, whether the available period of the vehicle 110 satisfies a predetermined condition is determined.

The predetermined condition, for example, may include whether the available period exceeds a predetermined period. The predetermined period, for example, may be 1 day, 2 days, 5 days, 1 month, or the like, which is not limited herein.

At block 206, a share request for the vehicle 110 is transmitted to a server 130 when the available period of the vehicle 110 satisfies the predetermined condition at block 204, where the share request is indicative of the available period and information of the vehicle. The information of the vehicle 110, for example, may include a location, a vehicle type, a photo of the vehicle 110, and the like.

In some implementations, the share request for the vehicle 110 can be transmitted to the server 130 as follows. A share order for the vehicle 110 is generated based on the available period of the vehicle 110 and the information of the vehicle. The share order for the vehicle 110 is presented. The share order for the vehicle 110 is transmitted to the server 130 when a user confirmation is received. The user confirmation, for example, may be a predetermined mode of motion of the electronic device 120, interaction of a display interface, a voice input, and the like.

In this way, the available period of the vehicle can be determined based on the schedule of the user of the electronic device to perform vehicle sharing, which makes the vehicle sharing more refined and intelligent.

FIG. 3 is a schematic flow chart illustrating a method 300 for determining an available period of a vehicle according to implementations of the disclosure. For example, the method 300 may be performed by the electronic device 120 as shown in FIG. 1. It should be noted that the method 300 may further include additional blocks not shown and/or may omit blocks shown, and the disclosure is not limited thereto.

At block 302, whether the vehicle is available during the schedule is determined based on at least one of a content or a location in the schedule.

At block 304, the available period of the vehicle 110 is determined based on a start time and an end time in the schedule when the vehicle is available during the schedule at block 302.

In some implementations, whether the vehicle is available during the schedule can be determined based on a content in the schedule. Whether the vehicle is available during the schedule, for example, may be determined as follows. Whether the schedule includes a first predetermined keyword is determined. It is determined that the vehicle 110 is available during the schedule when the schedule includes the first predetermined keyword. The first predetermined keyword, for example, may include a keyword indicating that the vehicle is available, such as "a business trip" or "a vacation". The schedule, for example, can be a calendar recording the following contents: "content: a business trip; start time: 9:00 ante meridiem (AM) on 17^{th} November; end time: 7:00 post meridiem (PM) on 19th November", here, it is determined that the vehicle is available during the schedule. A period from the start time of 9:00 AM on 17^{th} November in the schedule to the end time of 7:00 PM on 19^{th} November in the schedule is determined as the available period of the vehicle 110.

In some implementations, whether the vehicle is available during the schedule can be determined based on the location in the schedule. In some implementations, whether the vehicle is available during the schedule may be determined as follows. The location in the schedule and the location of the vehicle 110 are acquired, and whether an available condition of the vehicle is satisfied is determined based on the location in the schedule and the location of the vehicle 110 acquired. It is determined that the vehicle 110 is available during the schedule when the available condition of the vehicle is satisfied. For example, the schedule is a calendar recording the following contents: "location: Beijing; start time: 9:00 AM on 17^{th} November; end time: 7:00 PM on 19^{th} November", while the location of the vehicle 110 is Shanghai, which indicates that the location in the schedule and the location of the vehicle 110 are different places, i.e., the user and the vehicle 110 are located at different cities or regions. Here, the user does not use the vehicle 110 during the schedule and thus the vehicle 110 is available. It is determined that the vehicle 110 is available during the schedule. The period from the start time of 9:00 AM on 17^{th} November in the schedule to the end time of 7:00 PM on 19^{th} November in the schedule is determined as the available period of the vehicle 110.

In some implementations, whether the vehicle is available during the schedule can be determined based on the content and the location in the schedule. For example, whether the schedule includes the first predetermined keyword and whether the location in the schedule and the location of the vehicle 110 are different places can be determined. It is determined that the vehicle 110 is available during the schedule when the schedule includes the first predetermined keyword and the location in the schedule and the location of the vehicle 110 are different places.

In this way, it is possible to determine the available period of the vehicle based on the keyword and/or the location in the schedule of the user, which makes vehicle sharing performed at the available period of the vehicle more refined and intelligent.

FIG. 4 is a schematic flow chart illustrating a method 400 for determining an available period of a vehicle according to implementations of the disclosure. For example, the method 400 may be performed by the electronic device 120 as shown in FIG. 1. It should be noted that the method 400 may further include additional blocks not shown and/or may omit blocks shown, and the disclosure is not limited thereto.

At block 402, a first schedule in which a vehicle 110 becomes available is determined.

In some implementations, the first schedule in which the vehicle 110 becomes available may be determined as follows. Whether a schedule includes a first predetermined keyword is determined. The schedule is determined as the first schedule in which the vehicle becomes available when the schedule includes the first predetermined keyword. For example, if the schedule includes a keyword such as "a business trip" or "a vacation", it indicates that a user is on a business trip or a vacation and does not need to use the vehicle, and thus the schedule is the first schedule in which the vehicle 110 becomes available.

Alternatively or additionally, the first schedule in which the vehicle 110 becomes available can be determined as follows. A location in the schedule and a location of the vehicle 110 are acquired. Whether an available condition of the vehicle is satisfied is determined based on the location in the schedule and the location of the vehicle 110 acquired. The schedule is determined as the first schedule in which the vehicle 110 becomes available when the available condition of the vehicle is satisfied. In some implementations, the available condition of the vehicle may be whether the location in the schedule and the location of the vehicle 110 are different places. For example, the location in the schedule is Beijing Tiananmen, and the location of the vehicle 110 is Shanghai Century Park, which indicates that the location in the schedule and the location of the vehicle 110 are different places and the user does not use the vehicle, and thus the schedule can be determined as the first schedule in which the vehicle 110 becomes available. In another example, the schedule is traveling reservation information, e.g., information of an air ticket reservation. A target location in the traveling reservation information is Beijing International Airport, but the location of the vehicle 110 is the Shanghai Century Park, which may indicate that the user leaves the location of the vehicle and does not need the vehicle usage, i.e., the vehicle is available, such that the information of the air ticket reservation can be determined as the first schedule in which the vehicle 110 becomes available. It should be noted that, the above-mentioned information of the air ticket reservation is only an example, and it may be other traveling reservation information, e.g., information of a train ticket reservation, and ship reservation information. The traveling reservation information may include a short message or a message from a traveling reservation platform.

At block 404, a second schedule in which the vehicle 110 becomes unavailable is determined.

In some implementations, the second schedule in which the vehicle 110 becomes unavailable may be determined as follows. Whether the schedule includes a second predetermined keyword is determined. The schedule is determined as the second schedule in which the vehicle becomes unavailable when the schedule includes the second predetermined keyword. For example, if the schedule includes a keyword such as "go back home", or "return", it indicates that the user will return to the location of the vehicle and use the vehicle, and thus the schedule is the second schedule in which the vehicle 110 becomes unavailable.

Alternatively or additionally, the second schedule in which the vehicle 110 becomes unavailable may be determined as follows. The location in the schedule and the location of the vehicle 110 are acquired. Whether the available condition of the vehicle is not satisfied is determined based on the location in the schedule and the location of the vehicle 110. The schedule is determined as the second schedule in which the vehicle 110 becomes unavailable when the available condition of the vehicle is not satisfied. In some implementations, the available condition of the vehicle may be whether the location in the schedule and the location of the vehicle 110 are different places. For example, the location in the schedule is Shanghai Xintiandi, and the location of the vehicle 110 is the Shanghai Century Park, which indicates that the location in the schedule and the location of the vehicle 110 are not different places and the user will use the vehicle, thus the schedule can be determined as the second schedule in which the vehicle 110 becomes unavailable. In another example, the schedule is traveling reservation information, e.g., information of an air ticket reservation. A target location in the traveling reservation information is Shanghai Hongqiao Airport, but the location of the vehicle 110 is the Shanghai Century Park, which may indicate that the user will return to the location of the vehicle and use the vehicle, i.e., the vehicle is unavailable, such that the information of the air ticket reservation can be determined as the second schedule in which the vehicle 110 becomes unavailable.

At block 406, the available period of the vehicle 110 is determined based on time points in the first schedule and the second schedule.

In some implementations, a period from a time point in the first schedule to a time point in the second schedule is determined as the available period of the vehicle 110.

In this way, it is possible to determine the available period of the vehicle 110 based on the first schedule indicating that the vehicle becomes available and the second schedule indicating the vehicle becomes unavailable in the schedule of the user, which makes vehicle sharing performed at the available period of the vehicle more refined and intelligent.

The method 400 will be described below with an example of a short message for an air ticket reservation.

For example, multiple short messages for the air ticket reservation of the user are stored in the electronic device 120 and described respectively as follows. Message 1: Flight XXX at 10 o'clock, on 10^{th} November booked from Shenzhen Bao'an International Airport Terminal 1 to Shanghai has issued. Message 2: Flight XXX at 10 o'clock, on 17^{th} November booked from Shanghai Hongqiao International Airport Terminal 1 to Beijing has issued. Message 3: Flight XXX at 11 o'clock, on 19^{th} November booked from Beijing International Airport Terminal 3 to Shanghai has issued. The location of the vehicle 110 is the Shanghai Century Park. A target location in message 1 is Shanghai, and the location of the vehicle 110 also is Shanghai, which are not different places, thus message 1 is not the first schedule in which the vehicle 110 becomes available. A target location in message 2 is Beijing, and the location of the vehicle 110 is Shanghai, which are different, thus message 2 is the first schedule in which the vehicle 110 becomes available. A target location in message 3 is Shanghai, and the location of the vehicle 110 also is Shanghai, which are not different places, thus message 3 is the second schedule in which the vehicle 110 becomes unavailable. A period from 10 o' clock on 17^{th} November in message 2 to 11 o'clock on 19th November in message 3 is determined as the available period of the vehicle 110.

The method 400 will be described below with an example of a calendar.

For example, the calendar of the user is stored in the electronic device 120. There are multiple schedule arrangements recorded in the calendar. Schedule 1: time: 10 o'clock, on 10^{th} November, content: a meeting in a company. Schedule 2: time: 11 o'clock, on 11^{th} November, content: a business trip in Beijing. Schedule 3: time: 10 o'clock, on 13^{th} November, content: a return from the business trip. The content in schedule 1 includes no the first predetermined keyword, which indicates that schedule 1 is not the first schedule in which the vehicle 110 becomes available. The content in schedule 2 includes the first predetermined keyword, which indicates the vehicle is available, and thus schedule 2 is the first schedule in which the vehicle 110 becomes available. The content in schedule 3 includes the second predetermined keyword, which indicates the vehicle is unavailable, and thus schedule 3 is the second schedule in which the vehicle 110 becomes unavailable. A period from 11 o'clock, on 11^{th} November in schedule 2 to 10 o'clock, on 13^{th} November in schedule 3 is determined as the available period of the vehicle 110.

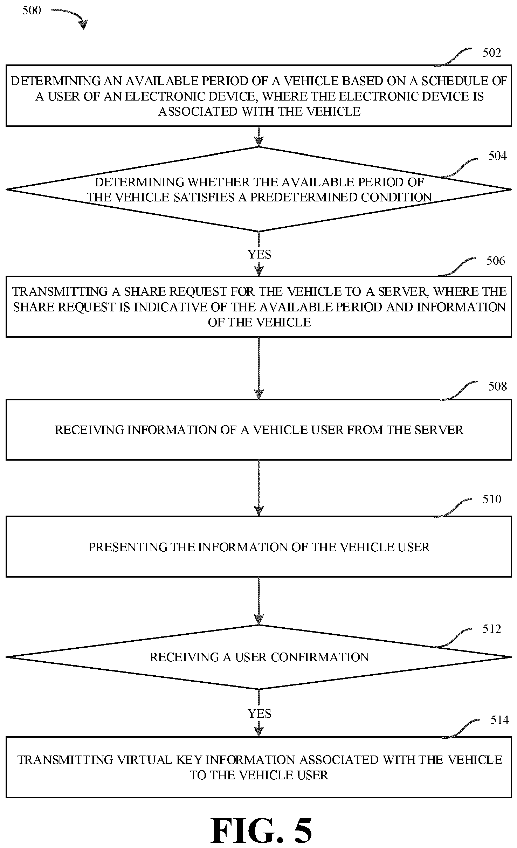

FIG. 5 is a schematic flow chart illustrating a method 500 for information processing according to implementations of the disclosure. For example, the method 500 may be performed by the electronic device 120 as shown in FIG. 1. It should be noted that the method 500 may further include additional blocks not shown and/or may omit blocks shown, and the disclosure is not limited thereto.

At block 502, at the electronic device 120, an available period of a vehicle 110 is determined based on a schedule of a user 140 of the electronic device 120, where the electronic device 120 is associated with the vehicle 110.

At block 504, whether the available period of the vehicle 110 satisfies a predetermined condition is determined.

At block 506, a share request for the vehicle 110 is transmitted to a server 130 when the available period of the vehicle 110 satisfies the predetermined condition at block 504, where the share request is indicative of the available period and information of the vehicle.

At block 508, information of a vehicle user is received from the server 130.

The information of the vehicle user, for example, may include contact information, a photo, a resume of the vehicle user, and the like.

In some implementations, the server 130 automatically matches the vehicle user based on the available period of the vehicle 110. For example, the available period of the vehicle 110 is from 9 o'clock, on 17^{th} November to 7 o'clock post meridiem (PM), on 18^{th} November, and a vehicle usage period requested by the vehicle user to the server 130 is the same period as the available period, and thus the server 130 automatically matches the vehicle 110 with the vehicle user.

At block 510, the information of the vehicle user is presented.

In some implementations, presenting the information of the vehicle user may include presenting the information of the vehicle user at a display of the electronic device 120. Alternatively or additionally, in some implementations, presenting the information of the vehicle user may include broadcasting the information of the vehicle user via a speaker of the electronic device 120.

At block 512, a user confirmation is received. As for the user confirmation, reference can be made to the above description, which will not be repeated herein.

At block 514, virtual key information associated with the vehicle 110 is transmitted to the vehicle user when the user confirmation is received at block 512. The virtual key information associated with the vehicle 110, for example, may be configured to unlock and/or start the vehicle 110 by methods such as Bluetooth, near field communication (NFC), a cellular communication, and the like.

In some implementations, the virtual key information associated with the vehicle 110 may include a control authority of the vehicle 110. The control authority, for example, may include an authority in aspects of the vehicle 110 such as a multimedia, a geographical scope, a speed, a glove box, and the like. Alternatively or additionally, in some implementations, the virtual key information associated with the vehicle 110 may include a permitted usage period of the vehicle 110. In some implementations, the permitted usage period of the vehicle 110 may be matched with the available period of the vehicle 110.

In this way, vehicle sharing can be performed based on a virtual key of the vehicle without a delivery of a physical key between a sharing user and the vehicle user, which simplifies operations and avoids a security risk existed in a physical key delivery, improving a security. Additionally, the vehicle user can be controlled to use some related functions of the vehicle due to the control authority included in the virtual key, further improving the security of the vehicle sharing. The permitted usage period of the vehicle 110 included in the virtual key is matched with the available period of the vehicle 110, which ensures that the vehicle user only can use the vehicle in the available period of the vehicle 110 and further improves the security of the vehicle sharing.

In some implementations, the method 500 further may include transmitting to the vehicle user at least one of a location of the vehicle 110, parking space information of the vehicle 110, or identification information of the vehicle 110. Transmitting the location of the vehicle 110 may facilitate the vehicle user to determine a geographical location of the vehicle 110. Transmitting the parking space information of the vehicle 110 may facilitate the vehicle user to determine a specific parking space of the vehicle 110. The parking space information, for example, may include a photo of the parking space and/or identification of the parking space. The identification information of the vehicle 110, for example, may include a license plate number of the vehicle 110, facilitating the user to determine a specific vehicle.

In some implementations, the method 500 further may include transmitting a geographical area of returning the vehicle to the vehicle user. In this way, it facilitates the vehicle user to return the vehicle 110 to an expected location of the sharing user, especially when a return location is different from a current location of the vehicle 110.

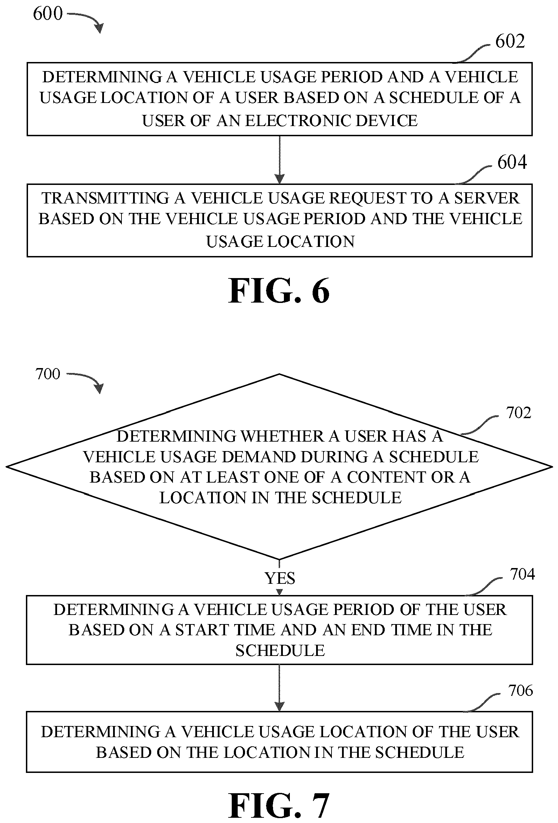

FIG. 6 is a schematic flow chart illustrating a method 600 for information processing according to implementations of the disclosure. For example, the method 600 may be performed by the electronic device 120 as shown in FIG. 1. It should be noted that the method 600 may further include additional blocks not shown and/or may omit blocks shown, and the disclosure is not limited thereto.

At block 602, at the electronic device 120, a vehicle usage period and a vehicle usage location of a user is determined based on a schedule of a user of the electronic device 120. The schedule, for example, may include a calendar, traveling reservation information, and the like.

At block 604, a vehicle usage request is transmitted to a server based on the vehicle usage period and the vehicle usage location.

In some implementations, the vehicle usage request can be transmitted to the server as follows. A vehicle usage order is generated based on the vehicle usage period and the vehicle usage location. The vehicle usage order is presented. The vehicle usage request is transmitted to the server when the user confirmation is received. The user confirmation, for example, may be a predetermined mode of motion of the electronic device 120, interaction of a display interface, a voice input, and the like.

In this way, it is possible to determine the vehicle usage period and the vehicle usage location based on the schedule of the user, which satisfies a vehicle usage demand of the user more accurately and intelligently.

FIG. 7 is a schematic flow chart illustrating a method 700 for determining a vehicle usage period and a vehicle usage location of a user according to implementations of the disclosure. For example, the method 700 may be performed by the electronic device 120 as shown in FIG. 1. It should be noted that the method 700 may further include additional blocks not shown and/or may omit blocks shown, and the disclosure is not limited thereto.

At block 702, at the electronic device 120, whether the user has a vehicle usage demand during a schedule is determined based on at least one of a content or a location in the schedule.

At block 704, the vehicle usage period of the user is determined based on a start time and an end time in the schedule when the user has the vehicle usage demand at block 702.

At block 706, the vehicle usage location of the user is determined based on the location in the schedule.

In some implementations, whether the user has the vehicle usage demand during the schedule can be determined based on the content in the schedule. In some implementations, whether the user has the vehicle usage demand during the schedule, for example, may be determined as follows. Whether the schedule includes a first predetermined keyword is determined. It is determined that the user has the vehicle usage demand during the schedule when the schedule includes the first predetermined keyword. The first predetermined keyword, for example, may include a keyword indicating that the vehicle is available, such as "a business trip" or "a vacation". The schedule, for example, can be a calendar recording the following contents: "content: a business trip; location: Beijing; start time: 9:00 ante meridiem (AM) on 17^{th} November; end time: 7:00 post meridiem (PM) on 19^{th} November", here, it is determined that the user has an off-site vehicle usage demand during the schedule. A period from 9:00 AM on 17^{th} November in the schedule to 7:00 PM on 19^{th} November in the schedule is determined as the available period of the user, and the location "Beijing" in the schedule can be determined as the vehicle usage location of the user.

In some implementations, whether the user has the vehicle usage demand during the schedule can be determined based on the location in the schedule. In some implementations, whether the user has the vehicle usage demand during the schedule, for example, may be determined as follows. The location in the schedule and a location of the vehicle 110 are required. Whether a vehicle usage condition of the user is satisfied is determined based on the location in the schedule and the location of the vehicle 110. It is determined that the user has the vehicle usage demand during the schedule when the vehicle usage condition of the user is satisfied. The schedule, for example, can be the calendar recording the following contents: "location: Beijing; start time: 9:00 AM on 17^{th} November; end time: 7:00 PM on 19^{th} November, the location of the vehicle 110 is Shanghai". It indicates that the location in the schedule and the location of the vehicle 110 are different places, an off-site vehicle usage condition of the user is satisfied, and thus it is determined that the user has the vehicle usage demand during the schedule. The period from the start time of 9:00 AM on 17^{th} November in the schedule to the end time of 7:00 PM on 19^{th} November in the schedule is determined as the vehicle usage period of the user, and the location "Beijing" in the schedule can be determined as the vehicle usage location of the user.

In some implementations, whether the vehicle is available during the schedule can be determined based on the content and the location in the schedule. For example, whether the schedule includes a first predetermined keyword and whether the location in the schedule and the location of the vehicle 110 are different places can be determined. It is determined that the user has the vehicle usage demand during the schedule when the schedule includes the first predetermined keyword and the location in the schedule and the location of the vehicle 110 are different places.

In this way, it is possible to determine the vehicle usage period and the vehicle usage location of the user based on the content and/or the location in the schedule of the user, which satisfies the vehicle usage demand of the user more accurately and intelligently.

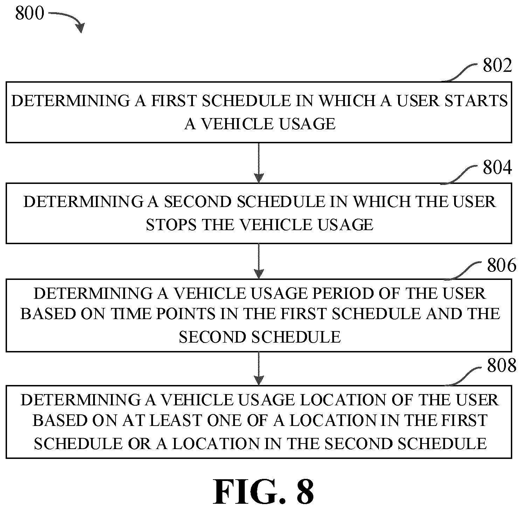

FIG. 8 is a schematic flow chart illustrating a method 800 for determining a vehicle usage period and a vehicle usage location of a user according to implementations of the disclosure. For example, the method 800 may be performed by the electronic device 120 as shown in FIG. 1. It should be noted that the method 800 may further include additional blocks not shown and/or may omit blocks shown, and the disclosure is not limited thereto.

At block 802, a first schedule in which the user starts a vehicle usage is determined.

In some implementations, the first schedule in which the user starts the vehicle usage may be determined as follows. Whether a schedule includes a first predetermined keyword is determined. The schedule is determined as the first schedule in which the user starts the vehicle usage when the schedule includes the first predetermined keyword. For example, if the schedule includes a keyword such as "a business trip", or "a vacation", it indicates that the user is on a business trip or a vacation and may need an off-site vehicle usage, and thus the schedule is determined as the first schedule in which the user starts the vehicle usage.

Alternatively or additionally, the first schedule in which the user starts the vehicle usage may be determined as follows. A location in the schedule and a location of the vehicle 110 are acquired. Whether a vehicle usage condition of the user is satisfied is determined based on the location in the schedule and the location of the vehicle 110. The schedule is determined as the first schedule in which the user starts the vehicle usage when the vehicle usage condition of the user is satisfied. In some implementations, the vehicle usage condition of the user may be whether the location in the schedule and the location of the vehicle 110 are different places. For example, the location in the schedule is Beijing Tiananmen, and the location of the vehicle 110 is Shanghai Century Park, which may indicate that the location in the schedule and the location of the vehicle 110 are different places and the user may need the off-site vehicle usage, and thus the schedule can be determined as the first schedule in which the user starts the vehicle usage. In another example, the schedule is traveling reservation information, e.g., information of an air ticket reservation. A target location in the traveling reservation information is Beijing International Airport, but the location of the vehicle 110 is the Shanghai Century Park, which may indicate that the user leaves the location of the vehicle and maybe need the off-site vehicle usage, and thus the information of the air ticket reservation can be determined as the first schedule in which the user starts the vehicle usage. It should be noted that, the above-mentioned information of the air ticket reservation is only an example, and it may be other traveling reservation information, e.g., information of a train ticket reservation, and ship reservation information. The traveling reservation information may include a short message or a message from a traveling reservation platform.

At block 804, a second schedule in which the user stops the vehicle usage is determined.

In some implementations, the second schedule in which the user stops the vehicle usage may be determined as follows. Whether the schedule includes a second predetermined keyword is determined. The schedule is determined as the second schedule in which the user stops the vehicle usage when the schedule includes the second predetermined keyword. For example, if the schedule includes a keyword such as "go back home", or "return", it indicates that the user will return to the location of the vehicle and does not need the off-site vehicle usage, and thus the schedule is the second schedule in which the user stops the vehicle usage.

Alternatively or additionally, the second schedule in which the user stops the vehicle usage may be determined as follows. A location in the schedule and the location of the vehicle 110 are acquired. Whether the vehicle usage condition of the user is not satisfied is determined based on the location in the schedule and the location of the vehicle 110 acquired. The schedule is determined as the second schedule in which the user stops the vehicle usage when the vehicle usage condition of the user is not satisfied. In some implementations, the vehicle usage condition of the user may be whether the location in the schedule and the location of the vehicle 110 are different places. For example, the location in the schedule is Shanghai Xintiandi, and the location of the vehicle 110 is Shanghai Century Park, which may indicate that the location in the schedule and the location of the vehicle 110 are not different places and the user does not need the off-site vehicle usage, and thus the schedule can be determined as the second schedule in which the user stops the vehicle usage. In another example, the schedule is traveling reservation information, e.g., information of an air ticket reservation. A target location in the traveling reservation information is Shanghai Hongqiao Airport, but the location of the vehicle 110 is the Shanghai Century Park, which may indicate that the user will return to the location of the vehicle and does not need the off-site vehicle usage, and thus the information of the air ticket reservation can be determined as the second schedule in which the user stops the vehicle usage.

At block 806, the vehicle usage period of the user is determined based on time points in the first schedule and the second schedule.

In some implementations, a period from a time point in the first schedule to a time point in the second schedule is determined as the vehicle usage period of the user.

At block 808, the vehicle usage location of the user is determined based on at least one of a location in the first schedule or a location in the second schedule.

In this way, it is possible to determine the vehicle usage period and the vehicle usage location of the user based on the first schedule indicating that the vehicle becomes available and the second schedule indicating the vehicle becomes unavailable in the schedule of the user, which satisfies a vehicle usage demand of the user more accurately and intelligently.

The method 800 will be described below with an example of a short message for an air ticket reservation.

For example, multiple short messages for the air ticket reservation of the user are stored in the electronic device 120 are described respectively as follows. Message 1: Flight XXX at 10 o'clock, on 10^{th} November booked from Shenzhen Bao'an International Airport Terminal 1 to Shanghai has issued. Message 2: Flight XXX at 10 o'clock, on 17^{th} November booked from Shanghai Hongqiao International Airport Terminal 1 to Beijing has issued. Message 3: Flight XXX at 11 o'clock, on 19^{th} November booked from Beijing International Airport Terminal 3 to Shanghai has issued. The location of the vehicle 110 is Shanghai Century Park. A target location in message 1 is Shanghai, and the location of the vehicle 110 also is Shanghai, which are not different places, thus message 1 is not the first schedule in which the user starts the vehicle usage. A target location in message 2 is Beijing, and the location of the vehicle 110 is Shanghai, which may satisfy an off-site vehicle usage condition of the user, thus message 2 is the first schedule in which the user starts the vehicle usage. A target location in message 3 is Shanghai, and the location of the vehicle 110 also is Shanghai, which do not satisfy the off-site vehicle usage condition of the user, thus message 3 is the second schedule in which the user ends the vehicle usage. A period from 10 o'clock on 17^{th} November in message 2 to 11 o'clock on 19^{th} November in message 3 is determined as the vehicle usage period of the user. The target location Beijing in message 2 or a departure location Beijing in message 3 is determined as the vehicle usage location of the user.

The method 800 will be described below with an example of a calendar.

For example, the calendar of the user is stored in the electronic device 120. There are multiple schedule arrangements recorded in the calendar. Schedule 1, time: 10 o'clock, on 10^{th} November, content: a meeting, location: a company. Schedule 2: time: 11 o'clock, on 11^{th} November, content: a business trip, location: Beijing. Schedule 3, time: 10 o'clock, on 13^{th} November, content: a return from the business trip. The content in schedule 1 includes no the first predetermined keyword, which indicates that schedule 1 is not the first schedule in which the user starts the vehicle usage. The content in schedule 2 includes the first predetermined keyword, which satisfies the vehicle usage condition of the user, thus schedule 2 is the first schedule in which the user starts the vehicle usage. The content in schedule 3 includes the second predetermined keyword, which does not satisfy the vehicle usage condition of the user, thus the schedule 3 is the second schedule in which the user stops the vehicle usage. A period from 11 o'clock, on 11^{th} November in schedule 2 to 10 o'clock, on 13^{th} November in schedule 3 is determined as the vehicle usage period of the user. The location "Beijing" in schedule 2 is determined as the vehicle usage location of the user.

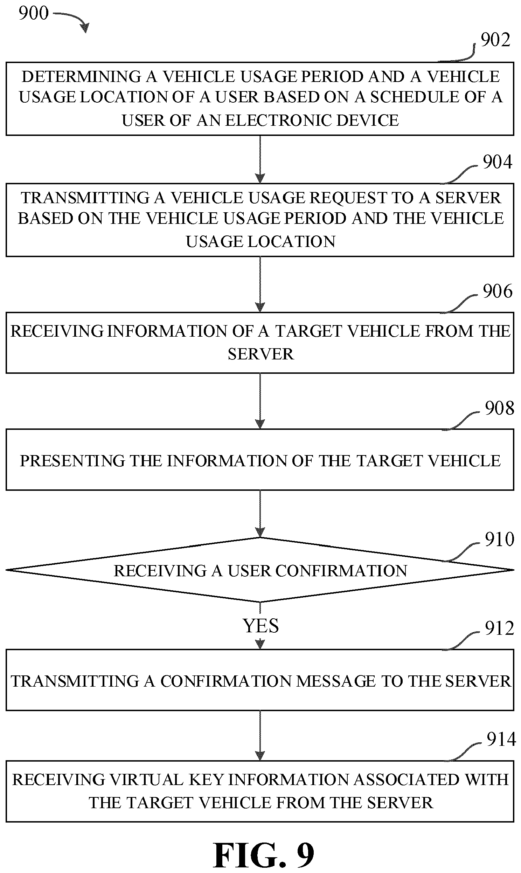

FIG. 9 is a schematic flow chart illustrating a method 900 for information processing according to implementations of the disclosure. For example, the method 900 may be performed by the electronic device 120 as shown in FIG. 1. It should be noted that the method 900 may further include additional blocks not shown and/or may omit blocks shown, and the disclosure is not limited thereto.

At block 902, at the electronic device 120, a vehicle usage period and a vehicle usage location of a user are determined based on a schedule of a user of the electronic device 120.

At block 904, a vehicle usage request is transmitted to a server 130 based on the vehicle usage period and the vehicle usage location.

At block 906, information of a target vehicle is received from the server 130.

In some implementations, the server 130 automatically matches the target vehicle based on the vehicle usage period and the vehicle usage location.

The information of the target vehicle, for example, may include a location of the target vehicle, a vehicle type of the target vehicle, and the like.

At block 908, the information of the target vehicle is presented.

In some implementations, presenting the information of the target vehicle may include presenting the information of the target vehicle at a display of the electronic device 120. Alternatively or additionally, in some implementations, presenting the information of the target vehicle may include broadcasting the information of the target vehicle via a speaker of the electronic device 120.

At block 910, a user confirmation is received. As for the user confirmation, reference can be made reference to the above description, which will not be repeated herein.

At block 912, a confirmation message is transmitted to the server 130 when the user confirmation is received at block 910.

In some implementations, the method 900 further includes block 914. At block 914, virtual key information associated with the target vehicle is received from the server 130.

In some implementations, the virtual key information may include a control authority of the target vehicle. As for the control authority, reference can be made to the above description, which will not be repeated herein. Alternatively or additionally, in some implementations, the virtual key information may include a permitted usage period of the target vehicle. In some implementations, the permitted usage period of the target vehicle may match the vehicle usage period of the user.

In this way, vehicle sharing can be performed based on the virtual key of the vehicle without a need for a physical key delivery between a sharing user and the vehicle user, which simplifies operations and avoids a security risk existed in the physical key delivery, improving a security. Additionally, the vehicle user can be controlled to use some related functions of the vehicle due to the control authority included in the virtual key, further improving the security of the vehicle sharing. The permitted usage period of the vehicle included in the virtual key matches the vehicle usage period of the user, which ensures that the vehicle user only can use the vehicle in the vehicle usage period of the user and further improves the security of the vehicle sharing.

In some implementations, the method 900 further may include receiving from the server 130 at least one of a location of the target vehicle, parking space information of the target vehicle, or identification information of the target vehicle. Receiving the location of the target vehicle may facilitate the user to determine a geographical location of the target vehicle. Receiving the parking space information of the target vehicle may facilitate the user to determine a specific parking space of the target vehicle. The parking space information, for example, may include a photo of the parking space and/or identification of the parking space. The identification information of the target vehicle, for example, may include a license plate number of the target vehicle, facilitating the user to determine a specific target vehicle.

In some implementations, the method 900 further may include a geographical area of returning the vehicle received from the server 130. In this way, it facilitates the user to return the target vehicle to an expected location, especially when a return location is different from a current location of the target vehicle.

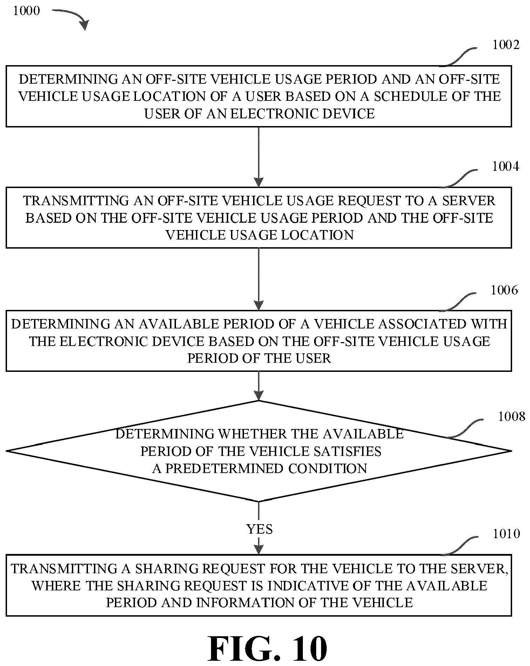

FIG. 10 is a schematic flow chart illustrating a method 1000 for information processing according to implementations of the disclosure. For example, the method 1000 may be performed by the electronic device 120 as shown in FIG. 1. It should be noted that the method 1000 may further include additional blocks not shown and/or may omit blocks shown, and the disclosure is not limited thereto.

At block 1002, at the electronic device 120, an off-site vehicle usage period and an off-site vehicle usage location of a user are determined based on a schedule of the user of the electronic device 120. Specific implementations can make reference to the above description, which will not be repeated herein.

At block 1004, an off-site vehicle usage request is transmitted to a server 130 based on the off-site vehicle usage period and the off-site vehicle usage location.

At block 1006, an available period of a vehicle 110 associated with the electronic device 120 is determined based on the off-site vehicle usage period of the user. In some implementations, the available period of the vehicle 110 is determined as the off-site vehicle usage period of the user.

At block 1008, whether the available period of the vehicle 110 satisfies a predetermined condition is determined.

At block 1010, a sharing request for the vehicle 110 is transmitted to the server 130 when the available period of the vehicle 110 satisfies the predetermined condition at block 1008, where the sharing request is indicative of the available period and information of the vehicle.

In this way, it is possible to determine the off-site vehicle usage period and the off-site vehicle usage location of the user based on a schedule of the user, thus determining the available period of the vehicle, which satisfies an off-site vehicle usage demand of the user and a sharing demand for available vehicles more accurately and intelligently.

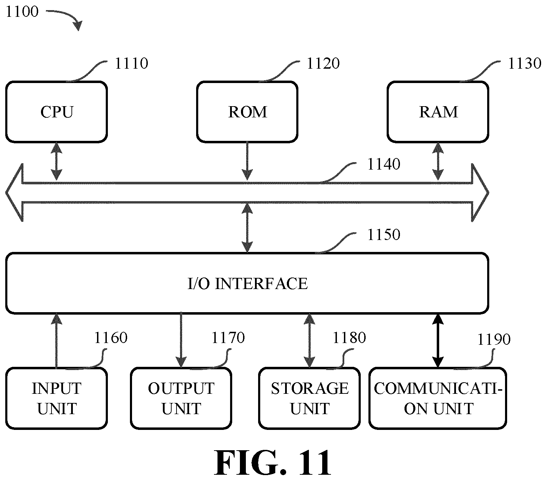

FIG. 11 is a schematic block diagram illustrating an example device 1100 which can be used to implement the disclosure. For example, the electronic device 120 shown in FIG. 1 may be implemented by the device 1100. As shown in the figure, the device 1100 includes a central processing unit (CPU) 1110, which can perform various appropriate actions and processing according to computer program instructions which are stored in a read-only memory (ROM) 1120 or loaded from a storage unit 1180 to a random access memory (RAM) 1130. In the RAM 1130, various programs and data required for the operation of the device 1100 can also be stored. The CPU 1110, the ROM 1120, and the RAM 1130 are connected with each other through a bus 1140. An input/output (I/O) interface 1150 is also connected with the bus 1140.

Multiple components in the device 1100 are connected to the I/O interface 1150, these components including: an input unit 1160, such as a keyboard, a mouse, etc.; an output unit 1170, such as various types of displays, speakers, etc.; a storage unit 1180, such as a magnetic disk, an optical disk, etc.; and a communication unit 1190, such as a network card, a modem, a wireless communication transceiver, etc. The communication unit 1190 allows the device 1100 to exchange information/data with other devices through a computer network such as the Internet and/or various telecommunication networks.

The various procedures and processing described above, such as the methods 200 to 1000, may be executed by the processing unit 1110. For example, in some implementations, the methods 200 to 1000 may be implemented as computer software programs, which are tangibly contained in a machine-readable medium, such as the storage unit 1180. In some implementations, part or all of the computer programs may be loaded and/or installed on the device 1100 via the ROM 1120 and/or the communication unit 1190. When the computer programs are loaded into the RAM 1130 and executed by the CPU 1110, one or more actions of the methods 200 to 1000 described above may be executed.

The present disclosure may be a method, device, system, and/or computer program product. The computer program product may include a computer-readable storage medium storing computer-readable program instructions for executing various aspects of the present disclosure.

The computer readable storage medium may be a tangible device that can retain and store instructions for use by an instruction execution device. The computer readable storage medium may be, for example, but is not limited to, an electronic storage device, a magnetic storage device, an optical storage device, an electromagnetic storage device, a semiconductor storage device, or any suitable combination of the foregoing. A non-exhaustive list of more specific examples of the computer readable storage medium includes the following: a portable computer diskette, a hard disk, a random access memory (RAM), a read-only memory (ROM), an erasable programmable read-only memory (EPROM or Flash memory), a static random access memory (SRAM), a portable compact disc read-only memory (CD-ROM), a digital versatile disk (DVD), a memory stick, a floppy disk, a mechanically encoded device such as punch-cards or raised structures in a groove having instructions recorded thereon, and any suitable combination of the foregoing. A computer readable storage medium, as used herein, is not to be construed as being transitory signals per se, such as radio waves or other freely propagating electromagnetic waves, electromagnetic waves propagating through a waveguide or other transmission media (e.g., light pulses passing through a fiber-optic cable), or electrical signals transmitted through a wire.

Computer readable program instructions described herein may be downloaded to respective computing/processing devices from a computer readable storage medium or to an external computer or external storage device via a network, for example, the Internet, a local area network, a wide area network and/or a wireless network. The network may include copper transmission cables, optical transmission fibers, wireless transmission, routers, firewalls, switches, gateway computers, and/or edge servers. A network adapter card or network interface in each computing/processing device receives computer readable program instructions from the network and forwards the computer readable program instructions for storage in a computer readable storage medium within the respective computing/processing device.

Computer readable program instructions for carrying out operations of the present disclosure may be assembler instructions, instruction-set-architecture (ISA) instructions, machine instructions, machine dependent instructions, microcode, firmware instructions, state-setting data, or either source code or object code written in any combination of one or more programming languages, including an object oriented programming language such as Smalltalk, C++ or the like, and conventional procedural programming languages, such as the "C" programming language or similar programming languages. The computer readable program instructions may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider). In some implementations, electronic circuitry including, for example, programmable logic circuitry, field-programmable gate arrays (FPGA), or programmable logic arrays (PLA) may execute the computer readable program instructions by utilizing state information of the computer readable program instructions to personalize the electronic circuitry, in order to perform aspects of the present disclosure.

Aspects of the present disclosure are described herein with reference to flowchart illustrations and/or block diagrams of methods, apparatus (systems), and computer program products according to implementations of the disclosure. It will be understood that each block of the flowchart illustrations and/or block diagrams, and combinations of blocks in the flowchart illustrations and/or block diagrams, can be implemented by computer readable program instructions.

These computer readable program instructions may be provided to a processor of a general purpose computer, special purpose computer, or other programmable data processing apparatus to produce a machine, such that the instructions, which execute via the processor of the computer or other programmable data processing apparatus, create module for implementing the functions/acts specified in the flowchart and/or block diagram block or blocks. These computer readable program instructions may also be stored in a computer readable storage medium that can direct a computer, a programmable data processing apparatus, and/or other devices to function in a particular manner, such that the computer readable storage medium having instructions stored therein includes an article of manufacture including instructions which implement aspects of the function/act specified in the flowchart and/or block diagram block or blocks.

The computer readable program instructions may also be loaded onto a computer, other programmable data processing apparatus, or other device to cause a series of operational steps to be performed on the computer, other programmable apparatus or other device to produce a computer implemented process, such that the instructions which execute on the computer, other programmable apparatus, or other device implement the functions/acts specified in the flowchart and/or block diagram block or blocks.

The flowchart and block diagrams in the Figures illustrate the architecture, functionality, and operation of possible implementations of systems, methods and computer program products according to various embodiments of the present invention. In this regard, each block in the flowchart or block diagrams may represent a module, segment, or portion of code, which includes one or more executable instructions for implementing the specified logical function(s). It should also be noted that, in some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts, or combinations of special purpose hardware and computer instructions.

The descriptions of the various implementations of the present disclosure have been presented for purposes of illustration, but are not intended to be exhaustive or limited to the implementations disclosed. Many modifications and variations will be apparent to those of ordinary skill in the art without departing from the scope and spirit of the described implementations. The terminology used herein was chosen to best explain the principles of the implementations, the practical application or technical improvement over technologies found in the marketplace, or to enable others of ordinary skill in the art to understand the implementations disclosed herein.

## Claims

1. A method for information processing, comprising:
determining, at an electronic device, an available period of a vehicle based on a schedule of a user of the electronic device, the electronic device being associated with the vehicle;
determining whether the available period of the vehicle satisfies a predetermined condition; and
transmitting a share request for the vehicle to a server, in response to determining that the available period of the vehicle satisfies the predetermined condition, the share request is indicative of the available period and information of the vehicle.

2. The method of claim 1, wherein determining the available period of the vehicle comprises:
determining whether the vehicle is available during the schedule based on at least one of a content or a location in the schedule; and
determining the available period of the vehicle based on a start time and an end time in the schedule in response to determining that the vehicle is available during the schedule.

3. The method of claim 1, wherein determining the available period of the vehicle comprises:
determining the schedule as a first schedule in which the vehicle becomes available in response to determining that the schedule comprises a first predetermined keyword;
determining the schedule as a second schedule in which the vehicle becomes unavailable in response to determining that the schedule comprises a second predetermined keyword; and
determining the available period of the vehicle based on time points in the first schedule and the second schedule.

4. The method of claim 1, wherein determining the available period of the vehicle comprises:
determining whether an available condition of the vehicle is satisfied based on a location in the schedule and a location of the vehicle;
determining the schedule as a first schedule in which the vehicle becomes available in response to determining that the available condition of the vehicle is satisfied;
determining the schedule as a second schedule in which the vehicle becomes unavailable in response to determining that the available condition of the vehicle is not satisfied; and
determining the available period of the vehicle based on time points in the first schedule and the second schedule.

5. The method of claim 1, wherein the schedule comprises at least one of a calendar, or traveling reservation information.

6. The method of claim 1, wherein transmitting the share request for the vehicle to the server comprises:
generating a share order for the vehicle based on the available period of the vehicle and the information of the vehicle;
presenting the share order for the vehicle; and
transmitting the share order for the vehicle to the server in response to a user confirmation received.

7. The method of claim 1, further comprising:
receiving information of a vehicle user from the server;
presenting the information of the vehicle user; and
transmitting virtual key information associated with the vehicle to the vehicle user in response to a user confirmation received.

8. The method of claim 7, wherein the server automatically matches the vehicle user based on the available period of the vehicle.

9. The method of claim 7, wherein the virtual key information comprises at least one of a control authority or a permitted usage period of the vehicle.

10. The method of claim 7, further comprising transmitting at least one of the following to the vehicle user:
a location of the vehicle, parking space information of the vehicle, identification information of the vehicle, or a geographical area of returning the vehicle.

11. A method for information processing, comprising:
determining, at an electronic device, a vehicle usage period and a vehicle usage location of a user based on a schedule of a user of the electronic device; and
transmitting a vehicle usage request to a server based on the vehicle usage period and the vehicle usage location to allow the server to match a sharable vehicle.

12. The method of claim 11, wherein determining the vehicle usage period and the vehicle usage location of the user comprises:
determining whether the user has a vehicle usage demand during the schedule based on at least one of a content or a location in the schedule;
determining the vehicle usage period of the user based on a start time and an end time in the schedule in response to determining that the user has the vehicle usage demand; and
determining the vehicle usage location of the user based on the location in the schedule.

13. The method of claim 11, wherein determining the vehicle usage period and the vehicle usage location of the user comprises:
determining the schedule as a first schedule in which the user starts a vehicle usage in response to determining that the schedule comprises a first predetermined keyword;
determining that the schedule as a second schedule in which the user stops the vehicle usage in response to determining that the schedule comprises a second predetermined keyword;
determining the vehicle usage period of the user based on the time points in the first schedule and the second schedule; and
determining the vehicle usage location of the user based on at least one of a location in the first schedule or a location in the second schedule.

14. The method of claim 11, wherein determining the vehicle usage period and the vehicle usage location of the user comprises:
acquiring a location in the schedule and a location of a vehicle associated with the electronic device;
determining whether a vehicle usage condition of the user is satisfied based on the location in the schedule and the location of the vehicle;
determining the schedule as a first schedule in which the user starts a vehicle usage in response to determining that the vehicle usage condition of the user is satisfied;
determining the schedule as a second schedule in which the user stops the vehicle usage in response to determining that the vehicle usage condition of the user is not satisfied;
determining the vehicle usage period of the user based on time points in the first schedule and the second schedule; and
determining the vehicle usage location of the user based on at least one of a location in the first schedule or a location in the second schedule.

15. The method of claim 11, wherein the schedule comprises at least one of a calendar, or traveling reservation information.

16. The method of claim 11, wherein transmitting the vehicle usage request to the server comprises:
generating a vehicle usage order based on the vehicle usage period and the vehicle usage location;
presenting the vehicle usage order; and
transmitting the vehicle usage order to the server in response to a user confirmation received.

17. The method of claim 11, further comprising:
receiving information of a target vehicle from the server;
presenting the information of the target vehicle; and
transmitting a confirmation message to the server in response to a user confirmation received.

18. The method of claim 17, wherein the server automatically matches the target vehicle based on the vehicle usage period and the vehicle usage location.

19. The method of claim 17, further comprising:
receiving virtual key information associated with the target vehicle from the server.

20. The method of claim 19, wherein the virtual key information comprises at least one of a control authority or a permitted usage period of the target vehicle.

21. The method of claim 19, further comprising receiving at least one of the following from the server:
a location of the target vehicle, parking space information of the target vehicle, identification information of the target vehicle, or a geographical area of returning the vehicle.

22. An electronic device, comprising:
at least one processing unit; and
at least one memory coupled with the at least one processing unit and storing instructions configured to be executed by the at least one processing unit, wherein when executed by the at least one processing unit, the instructions cause the electronic device to perform the method of any of claims 1 to 21

23. A computer-readable storage medium storing a computer program thereon, wherein when executed by a machine, the computer program implements the method of any of claims 1 to 21.
